# EUROPEAN PATENT APPLICATION

(11) **EP 1 701 572 A2**
(43) Date of publication of application: **13.09.2006**
(21) Application number: 06001434.7
(22) Date of filing: 24.01.2006
(51) Int. Cl.: H04Q 7/38

(54) **Performing mobile terminal handover in response to user input**

(30) Priority: 08.03.2005 KR 2005019203
(71) Applicant: Samsung Electronics Co., Ltd., Suwon-si, Gyeonggi-Do (KR)
(72) Inventor: Kim, Hoe-Won, Yeongtong-gu Suwon-si Gyeonggi-do (KR); Lee, Ki-Tae, Yeongtong-gu Suwon-si Gyeonggi-do (KR); Kim, Ok-Hyeon, Yeongtong-gu Suwon-si Gyeonggi-do (KR)
(74) Representative: Grünecker, Kinkeldey, Stockmair & Schwanhäusser Anwaltssozietät

(57) **Abstract**

A method for handover in a mobile terminal includes detecting whether a manual instruction for handover of the mobile terminal from a first communication network to another communication network is inputted by a user. After detecting the manual instruction, a registration is made with a second communication network when the mobile terminal moves into a coverage area of the second communication network. A detection is made, after the registration, as to whether the handover of the mobile terminal is possible, and a handover process is started.

## Description

The present invention relates to a method for performing mobile terminal handover in response to user input. The present invention also relates to a corresponding mobile terminal and a system.

Generally, the term of mobile communication systems refer to wireless communication networks for providing voice and/or data communication. As mobile communication terminals become more widely used, mobile communication networks may require systems to effectively transmit the voice, data, etc. While in the following discussion of the background of the invention, GPRS/GSM networks and WLAN along with associated problems are discussed, similar problems may also arise in other communication networks including but not limited to CDMA networks, and the present invention may be applied in any communication network.

As the amount of data to be transmitted increases for various services provided through the mobile communication networks, a General Packet Radio Service (GPRS) has been developed by improving a network based on an existing Global System for Mobile communication (GSM). In a packet data service using the GPRS, the user's main purpose for using GPRS may be for the conventional Internet uses, such as file transmission of a wireless PC, transmission and reception of E-mails, and search service using World Wide Web.

On the other hand, there also exists Wireless Local Area Network (WLAN) which provides service having a service range covering a smaller area than the above-mentioned mobile communication networks. The WLAN supplies services using wireless media as data transmission media instead of an existing wireline local area network. Such a WLAN is rapidly replacing the wireline local area network since WLAN can be introduced in sites where wiring with cable may be difficult or a cleaner appearance without the wirelines may be important.

Recently, there has been a need for a mobile terminal compatible with both technologies, e.g., a dual-mode mobile terminal supporting both the GSM/GPRS network and WLAN. Various technologies to allow such compatibility including a handover technology to provide a mobility to allow the mobile terminal to move and switch between WLAN and GSM/GPRS network are needed.

Generally, a handover refers to a technology for the mobile terminal to switch the cell communication from that of one cell to another in order for a user to perform a seamless communication, when the mobile terminal moves between cells. For example, in the case where a subscriber moves from a coverage area of the WLAN to the GSM/GPRS network during the communication of the subscriber through the WLAN, a call can be disconnected if handover is not performed. In order to prevent the disconnection of the call, a handover operation may be performed, in which the dual-mode mobile terminal selects a communication network capable of supplying a proper service at a current user position. Although the GPRS/GSM networks and WLAN were discussed in detail above, the foregoing deficiencies may also arise in other communication networks including but not limited to CDMA networks.

Conventionally, it is important to perform handover at a point in time when handover is required by a dual-mode mobile terminal capable of performing the communication with a WLAN and a GSM/GPRS network. Such dual-mode mobile terminal may frequently check whether the handover can be performed without any input from the user as to the handover. Such frequent checking may rapidly drain the battery charge of the mobile terminal. Further, even though the user may prefer to communicate by using a relatively inexpensive WLAN, the user may not be able to control and select for such use. Therefore, there is a need for a method for performing mobile terminal handover in response to a user input.

It is the object of the present invention to provide an improved method for performing a handover of a mobile terminal from a first communication network to another communication network.

This object is solved by the subject matter of the independent claims.

Preferred embodiments are defined in the dependent claims.

According to one aspect of the present invention, there is provided a method for handover in a mobile terminal that includes detecting whether a manual instruction for handover of the mobile terminal from a first communication network to another communication network is inputted by a user. After detecting the manual instruction, a registration is made with a second communication network when the mobile terminal moves into a coverage area of the second communication network. A detection is made, after the registration, as to whether the handover of the mobile terminal is possible, and a handover process is started.

According to another aspect of the present invention, there is provided a mobile terminal that is adapted to perform the above-mentioned method for handover.

The present invention will be more apparent from the following detailed description taken in conjunction with the accompanying drawings, in which:
FIG. 1 is a diagram illustrating a mobile communication system for handover between a WLAN and a GSM/GPRS network according to an exemplary embodiment of the present invention;
FIG. 2 is a block diagram illustrating a dual-mode mobile terminal for performing handover between the WLAN and the GSM/GPRS network according to an exemplary embodiment of the present invention;
FIG. 3 is a diagram illustrating a procedure of determining the point in time at which the handover from the GSM/GPRS network to the WLAN is to be performed according to an exemplary embodiment of the present invention;
FIG. 4 is a flow chart illustrating an exemplary method for handover between the two networks; and
FIG. 5 is a flow chart illustrating another exemplary method for handover between two networks according to an exemplary embodiment of the present invention.

Hereinafter, preferred embodiments of the present invention will be described in detail with reference to the accompanying drawings. Note that like reference numerals denote the same element throughout drawings and the description. In the following description of the present invention, a detailed description of known functions and configurations incorporated herein will be omitted to avoid making the subject matter of the present invention unclear.

The present invention provides a method of efficiently performing handover between communication networks in a system comprising the networks and mobile terminals at a time point at which a user wants the handover. When determining the timing of the handover, a mobile terminal according to an exemplary embodiment of the present invention, moves between a WLAN and a GSM/GPRS network, the present invention allows the user to directly determine the point in time when the handover between the two communication networks is to occur according to a user necessity. Although the communication system is illustrated with WLAN and a GSM/GPRS network, the present invention may also be applied to other communication systems including but not limited to CDMA networks. Dual mode mobile terminals is referred to throughout the disclosure, but however, the present invention is also applicable to any other mobile terminals. Mobile terminals, as referred to throughout the disclosure, may be any wireless communication terminals including but not limited to cell phones, computers and PDAs.

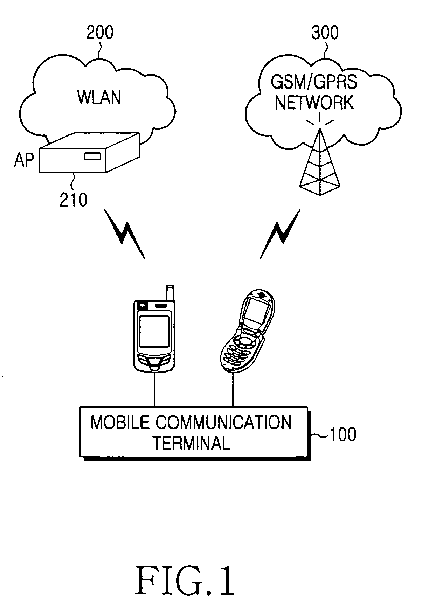

Structural elements and their operation of the mobile communication system having the function described above, according to an exemplary embodiment of the present invention, will be described with reference to FIG. 1. Specifically, the WLAN and the GSM/GPRS network will be described as examples of the two communication networks.

As shown in FIG. 1, the mobile communication system, according to an exemplary embodiment of the present invention, includes a WLAN 200 having a smaller service area and a GSM 300 network having a wider service area. Accordingly, in a case where the dual-mode mobile terminal 100 is located in an area which the WLAN covers, the dual-mode mobile terminal 100 can perform a communication using a wireless local area communication scheme through an access point 210.

Depending on the circumstances, use of one of the WLAN and the GSM/GPRS network according to an exemplary embodiment of the present invention may be preferred over the other. First, the WLAN normally is less expensive in terms of a service charge, but normally has a narrower service area than the GSM/GPRS network. Meanwhile, the GSM/GPRS network is normally more expensive in terms of a service charge, but normally has a wider service area than the WLAN. Thus, with the dual-mode mobile terminal supporting both the WLAN and the GSM/GPRS network, the user may carry out wireless local communication in areas which the WLAN is used, e.g. in areas which a WLAN access point is located, and may use the GSM/GPRS network in other areas. Such arrangement according to an exemplary embodiment of the present invention may provide an inexpensive and high speed data service via the use of the WLAN.

However, where the dual-mode mobile terminal according to an exemplary embodiment of the present invention moves into or out of the area covered by the WLAN, there is a challenge in that handover between the two communication networks must be performed. Thus, there is a requirement for a method which smoothly performs handover between the WLAN and the GSM/GPRS network in order to solve problems relating to the handover. Therefore, in the case where the dual-mode mobile terminal moves into and out of the WLAN coverage area, there is a need for an algorithm to determine the point in time when the handover of the mobile terminal is to occur. In the present invention, the algorithm allows the user to select a desired communication network according to a manual input from the user. According to the algorithm, where the user moves from the GSM/GPRS network to the WLAN, according to an exemplary embodiment of the present invention, in which the service charge may be less expensive, it is determined/detected if the dual-mode mobile terminal is currently located in the area of the WLAN. After detecting whether a signal from the second communication network is over a threshold value, the user is notified that the handover of the mobile terminal can be performed, and then the user determines if the current communication mode is to be changed to a communication mode in which a communication is carried out through the WLAN.

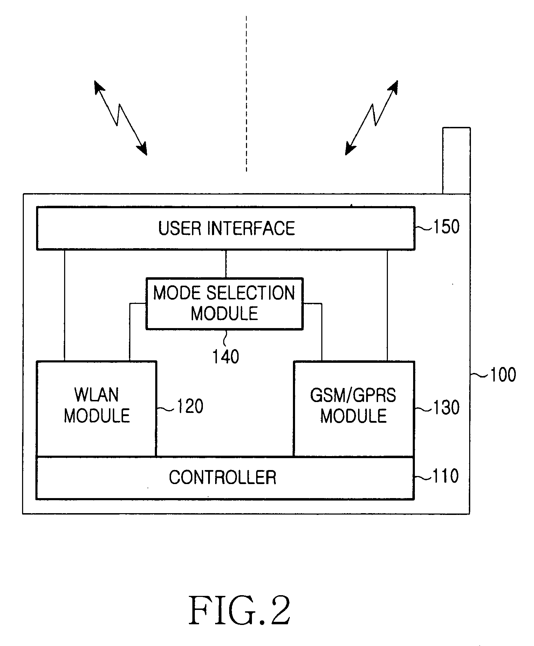

Hereinafter, a method for the handover of the dual-mode mobile terminal between the WLAN and the GSM/GPRS network during a movement of the mobile terminal into and out of a coverage area of the WLAN according to an exemplary embodiment of the present invention will be described. FIG. 2 is a block diagram showing an internal structure of the dual-mode mobile terminal for performing the handover between the WLAN and the GSM/GPRS network according to an exemplary embodiment of the present invention.

First, the dual-mode mobile terminal 100 is provided with two modules supporting communication technologies, e.g. WLAN and GSM/GPRS network, respectively, according to an exemplary embodiment of the present invention, which has a function for performing handover of the mobile terminal between the WLAN and the GSM/GPRS network.

Thus, the dual-mode mobile terminal 100 includes a WLAN module 120, a GSM/GPRS module 130, a mode selection unit 140, and a controller 110. The WLAN module 120 provides software for performing a wireless local area network communication, while the GSM/GPRS module 130 provides software for performing communication with GSM/GPRS network. Upon receiving a handover determination command by a user through the user interface 150, the mode selection unit 140 operates one of the WLAN and the GSM/GPRS modules based on the communication network in which the dual mode mobile terminal 100 is located.

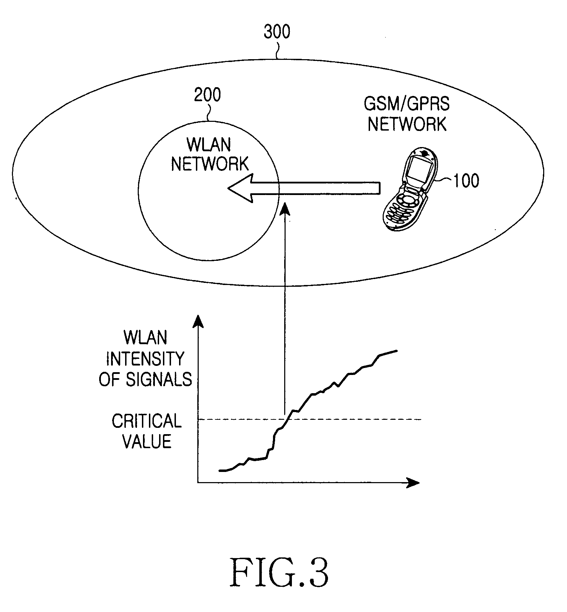

Specifically, the mode selection unit 140 according to an exemplary embodiment of the present invention can compare an intensity of signal measured by the WLAN module 120 to a predetermined threshold value in order to decide if the dual-mode mobile terminal 100 has moved from one communication network into the coverage area of another communication network, and select the corresponding module based on the result of the comparison. Such a step will now be described in more detail with reference to FIG. 3. FIG. 3 is a diagram showing a procedure for determining the timing of the handover of a mobile terminal from the GSM/GPRS network to the WLAN, according to one exemplary embodiment of the present invention. Referring to FIG. 3, the handover of the mobile terminal can be performed in two cases, i.e. the handover of the mobile terminal when the mobile terminal 100 in the coverage area of the GSM/GPRS network 300 moves out of the coverage area of the WLAN 200, and the handover of the mobile terminal when the mobile terminal 100 in the coverage area of the GSM/GPRS network 300 moves into the coverage area of the WLAN 200. In this embodiment of the present invention, as shown in FIG. 3, the dual-mode terminal 100 performs the handover from the GSM/GPRS network 300 to the WLAN 200. However, in the case where the dual-mode mobile terminal 100 performs the handover from the WLAN 200 to the GSM/GPRS network 300, the following description can be applied.

Referring to FIG. 3, the mode selection unit 140 determines if the dual-mode mobile terminal 100 moves from the GSM/GPRS 300 network to the WLAN 200. Here, the mode selection unit 140 receives signals transmitted from the WLAN 200, measures the intensity of the signals from the WLAN 200, and compares the intensity of the signals to a predetermined threshold value. The result of the comparison is supplied to the controller 110. Then, the controller 110 determines that the dual-mode mobile terminal 100 enters the coverage area of the WLAN 200 based on the comparison result. Next, the controller 110 outputs a message or an image showing the possibility of handover on a display unit of the mobile terminal, so as to inform the user of the ability to perform handover. Thereafter, the controller 110 determines if the user inputs an instruction of performing the handover in response to the message or the image showing the possibility of handover displayed on the display unit of the mobile terminal. The controller 110 controls the mode selection unit 140 to operate the WLAN module 120, thereby performing the handover of the mobile terminal in order for the user to communicate through the WLAN. However, when the users' instruction of performing the handover of the mobile terminal is not received, the controller 110 continues to repeatedly monitor and detect if the instruction is manually input by the user.

On the other hand, when a mode selection unit 140 according to another exemplary embodiment of the present invention detects that a user enters an area of WLAN and manually inputs an instruction for performing the handover of the mobile terminal, the mode selection unit 140 determines/detects if the handover of the mobile terminal is possible and then selects a corresponding module based on the result from the determination thereof. Thus, the dual-mode mobile terminal 100 performs the handover thereof between the WLAN and the GSM/GPRS network and changes the communication mode to operate in a mode suitable for the corresponding communication scheme.

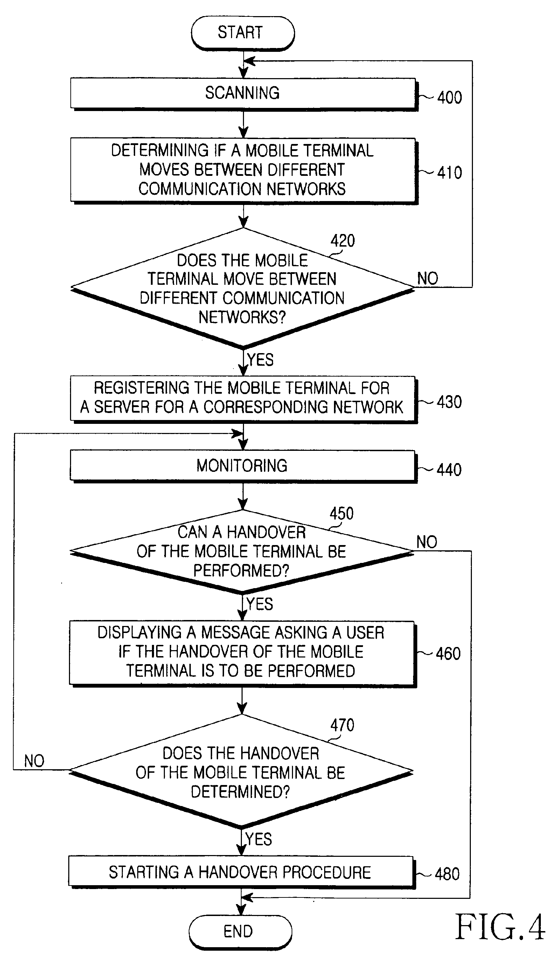

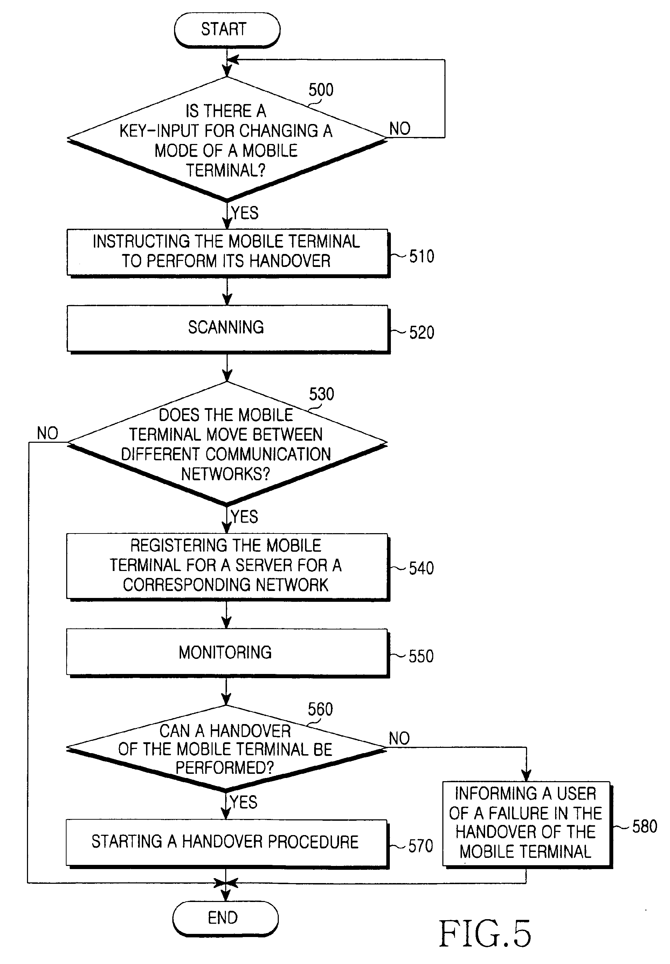

Next, the details of exemplary embodiments of the present invention will be described with reference to FIGS. 4 and 5. FIG. 4 is a flow chart showing handover between the GSM/GPRS network and the WLAN according to one exemplary embodiment of the present invention shown in FIG. 3, and FIG. 5 is a flow chart showing handover between the GSM/GPRS network and the WLAN according to another exemplary embodiment of the present invention.

Referring to FIG. 4, the dual-mode mobile terminal 100 according to an exemplary embodiment of the present invention may perform a scanning operation in step 400 as done in the conventional handover procedures. The scanning operation of the dual-mode mobile terminal 100 refers to an operation of scanning the WLAN at a predetermined period during a communication using the GSM/GPRS network. Also, the scanning operation can be applied in order to scan the GSM/GPRS network in the case where the mobile terminal 100 is located within the WLAN. The dual-mode mobile terminal 100 detects, through the scanning operation, if the mobile terminal moves from the current communication network to which the mobile terminal belongs toward another communication network, in step 410. Then, the dual-mode terminal 100 proceeds to step 420, so as to determine if the mobile terminal 100 in the coverage area of current communication network moves into the coverage area of another network. When it is determined that the mobile terminal 100 has moved from the current communication network coverage area into that of another network, the mobile terminal 100 proceeds to step 430 in order to register for another communication network. The registration process refers to a process of registering for a WLAN after the mobile terminal 100 finds the WLAN. The registration may be done with a server/access point/base station of the another network, which may be any network including but not limited to WLAN, GSM/GPRS network and CDMA network. When the registration process according to an exemplary embodiment of the present invention is completed, the dual-mode mobile terminal proceeds to step 440 to perform a monitoring process. The monitoring process represents a process of checking transmission and reception conditions, such as reception quality of the WLAN, average throughput, etc. Generally, the handover procedure may start only where the above-mentioned conditions are satisfied during the monitoring process. For example, the handover condition may be that a signal from the second communication network is over a threshold value and the handover may be triggered if the signal is over the threshold value.

In the case of the GSM/GPRS network, the mobile terminal compares the reception strength and the reception quality of a current serving base station to those of a neighboring base station/access point before determining if the handover procedure is to begin. When the handover procedure cannot be continued due to unexpected circumstances, even after the handover procedure starts, the mobile terminal treats a failure of the handover and returns the communication to the existing base station in order to perform the monitoring process.

On the other hand, if the dual-mode mobile terminal 100 determines that the above-mentioned conditions (e.g., a signal from the second communication network is over a threshold value) are satisfied based on the monitoring process, it determines that the handover thereof can be performed in step 450. When the handover of the mobile terminal is found to be possible after the determination in step 450, the dual-mode mobile terminal 100 informs the user of that handover of the mobile terminal 100 can be performed by displaying a message asking a user if the handover of the mobile terminal 100 is to be performed. When such a message is displayed, the dual-mode mobile terminal 100 proceeds to step 470 in order to detect if the user inputs an instruction for handover to the mobile terminal. When a user decides to perform the handover, the mobile terminal 100 proceeds to step 480 and starts the handover procedure. As a result, the dual-mode mobile terminal 100 can switch its mode to perform communication through a corresponding communication network.

Hereinafter, a method for handover of the dual-mode mobile terminal between the GSM/GPRS network and the WLAN according to another exemplary embodiment of the present invention will be described with reference to FIG. 5.

The dual-mode mobile terminal 100 of FIG. 5 according to an exemplary embodiment of the present invention does not sequentially perform a scanning process, a registration process, a monitoring process, and the like, but rather detects if a handover can be performed only after a user instructs the mobile terminal to perform the handover of the mobile terminal 100. Subsequent to such user input, the dual-mode mobile terminal determines if the handover procedure is to start.

Thus, the dual-mode mobile terminal 100 according to an exemplary embodiment of the present invention may not perform operations relating to a new communication network until after the user performs a key-input to change the communication mode of the mobile terminal, in step 500. When the user enters into a coverage area in which communication using the WLAN is possible, for example, the user may wish to communicate using the WLAN which may be less expensive in terms of a service charge, compared to that of the current GSM/GPRS network. At this time, the user can instruct the mobile terminal to perform its handover in order to change the current communication scheme at the point in time that the user enters into the WLAN coverage area.

Thus, the dual-mode mobile terminal 100 according to an exemplary embodiment of the present invention determines if the user performs the key-input to change the communication mode from that for the current communication network to another for another communication network. Then, the dual-mode mobile terminal 100 regards the key-input for changing the mode as an instruction to perform the handover. After detecting the key-input, the dual-mode mobile terminal 100 proceeds to step 520 and performs a scanning operation. Next, the dual-mode mobile terminal 100 proceeds to step 530 in order to determine if the mobile terminal has moved between the coverage areas of the communication networks, based on the result of the scanning operation. If the mobile terminal has moved between the communication network coverage areas, the dual-mode mobile terminal 100 proceeds to step 540 wherein it performs a registering operation, and then performs a monitoring operation in step 550. At this time, the monitoring operation generally represents a process of checking if the handover of the mobile terminal is possible, and can be omitted in the state that an instruction to perform the handover is input to the mobile terminal. If the handover is not performed, it can reduce the load on executed software.

Therefore, when the registering process or the monitoring process according to an exemplary embodiment of the present invention is completed, the dual-mode mobile terminal 100 proceeds to step 560 so as to determine if its handover is possible. Here, when the handover of the mobile terminal 100 is possible, the dual-mode mobile terminal 100 proceeds to step 570 and starts the handover procedure, so as to perform an operation according to a general handover protocol. However, when the handover of the mobile terminal 100 cannot be completed due to various circumstances, the mobile terminal 100 proceeds to step 580 to inform the user of failure in its handover 580. In another embodiment of the present invention, as described above, the user can determine the point in time at which the handover of the dual-mode mobile terminal is to occur. Further, the user can choose to perform handover of the mobile terminal only when the handover is deemed necessary by the user, and it is not necessary to perform a scanning operation, registering operation, etc. Such reduction of processes results in many benefits including but not limited to the reduced consumption of battery and extended communication and standby time of the mobile terminal.

According to an exemplary embodiment of the present invention as described above, since the user can select to perform handover of the mobile terminal directly at the point in time when the user wants to perform the handover, it is possible for the user to pick a more beneficial communication mode, reduce the consumption of the battery and/or reduce a number of processes involved with detecting the point in time that handover is to occur. Furthermore, according to an exemplary embodiment of the present invention where the user is informed whether the current communication network can be connected to the WLAN, the user may instruct the mobile terminal to perform the handover when the user desires use of the WLAN which may be less expensive in term of the service charge than other communication networks.

While the invention has been shown and described with reference to certain preferred embodiments thereof, it will be understood by those skilled in the art that various changes in form and detail may be made therein without departing from the scope of the invention as defined by the appended claims.

## Claims

1. A method for handover in a mobile terminal, the method comprising the steps of:
detecting whether an instruction for handover of the mobile terminal from a first communication network to another communication network is manually inputted by a user;
after detecting the instruction input, registering with a second communication network when the mobile terminal moves into a coverage area of the second communication network;
after the registration, detecting whether the handover of the mobile terminal is possible; and
starting a handover process.

2. The method of claim 1, wherein the first and second communication networks correspond to a GSM/GPRS network and WLAN, respectively.

3. The method of claim 1 or 2, further comprising a step of informing a failure to complete the handover.

4. The method of one of claims 1 to 3, wherein the step of detecting whether the handover of the mobile terminal is possible determines whether a signal from the second communication network is over a threshold value.

5. The method of one of claims 1 to 4, wherein the registration is performed by a process involving communication with an access point of the second communication network.

6. A method for handover in a mobile terminal, the method comprising the steps of:
registering with a second communication network when the mobile terminal in a coverage area of a first communication network moves into a coverage area of the second communication network;
after the registration, detecting whether handover of the mobile terminal from the first communication network to the second communication network is possible;
after detecting that the handover of the mobile terminal is possible, displaying a message asking a user if the handover is to be performed; and
starting a handover process.

7. The method of claim 6, wherein the first and second communication networks correspond to a GSM/GPRS network and WLAN, respectively.

8. The method of claim 6 or 7, further comprising a step of informing a failure to complete the handover.

9. The method of one of claims 6 to 8, wherein the step of detecting whether the handover of the mobile terminal is possible determines whether a signal from the second communication network is over a threshold value.

10. The method of one of claims 6 to 9, wherein the registration is performed by a process involving communication with an access point of the second communication network.

11. The method of one of claims 6 to 10, further comprising the step of detecting, after the displaying step, whether an instruction to conduct the handover is manually inputted by a user.

12. A system comprising:
a first communication network; and
a mobile terminal adapted to communicate with the first communication network, detect whether an instruction for handover of the mobile terminal from the first communication network to another communication network is manually inputted by a user and start a handover process.

13. The system of claim 12, wherein the mobile terminal is further adapted to, after detecting the manual instruction input, register with a second communication network when the mobile terminal moves into a coverage area of the second communication network and detect, after the registration, whether the handover of the mobile terminal is possible.

14. The system of claim 12 or 13, wherein the mobile terminal is further adapted to register with the second communication network when the mobile terminal moves into a coverage area of a second communication network, detect, after the registration, whether the handover of the mobile terminal is possible, and display, after detecting that the handover of the mobile terminal is possible, a message asking a user whether the handover is to be performed.

15. The system of one of claims 12 to 14, wherein the first communication network and said another communication network correspond to a GSM/GPRS network and WLAN, respectively.

16. The system of one of claims 12 to 15, wherein the mobile terminal is further adapted to inform a failure to complete the handover.

17. The system of one of claims 12 to 16, wherein the mobile terminal is further adapted to detect whether a signal from the second communication network is over a threshold value.

18. A mobile terminal adapted for performing a method for handover according to one of claims 1 to 11.
